# EUROPEAN PATENT APPLICATION

(11) **EP 4 843 894 A1**
(43) Date of publication of application: **25.11.2026**
(21) Application number: 24918828.5
(22) Date of filing: 16.01.2024
(51) Int. Cl.: B64G 1/22

(54) **DEPLOYMENT STRUCTURE FOR SPACE**

(71) Applicant: Mitsubishi Electric Corporation, Tokyo 100-8310 (JP)
(72) Inventor: AKAZAWA, Kei, Tokyo 100-8310 (JP)
(74) Representative: Hoffmann Eitle
(86) International application number: PCT/JP2024/001027
(87) International publication number: WO 2025/154182

(57) **Abstract**

A deployable structure for space such as a deployable solar array wing (1) includes a plurality of frame units (10) in each of which a film (30) having a mounting surface (31) on which a mounted object such as a solar cell (40) is mounted is attached to a frame (20). When the deployable structure for space is stowed, the plurality of frame units (10) are stacked. The deployable structure for space includes a protective material (60) that is sandwiched in a compressed manner between films (30) in frame units (10) that are adjacent to each other in the stowed state.

## Description

### Technical Field

The present disclosure relates to a structure that is to be used in space and can be stowed and deployed.

### Background Art

For small satellites, there has been a rise in small constellation satellite projects aimed at mass production and cost reduction in recent years. For medium to large satellites, there has been a trend towards simultaneous launches of multiple satellites aimed at cost reduction. Amidst such trends, deployable structures for space such as solar array wings are required to realize three elements: "low cost", "mass producibility", and "excellent stowage".

One type of solar array wing that has been widely used conventionally is a type in which solar cells are mounted on the surface of a structure composed of an aluminum honeycomb core that is sandwiched between carbon fiber skins. This type of solar array wing involves many steps in a production process, making it difficult to achieve the "low cost" and "mass producibility" elements. This type of solar array wing has limitations in terms of thinning, also making it difficult to achieve the "excellent stowage" element.

Patent Literature 1 describes a deployable solar array wing that is suitable for realizing the above three elements. The deployable solar array wing described in Patent Literature 1 is a flat-pack type solar array wing.

The flat-pack type solar array wing is composed of a plurality of films or a plurality of thin plates, on each of which solar cells are mounted, arranged in a straight line and folded in an accordion-like manner for stowage. Patent Literature 1 describes a configuration composed of a plurality of frame units, each composed of a compact frame made of carbon fiber beams having the same cross-section and mechanically fastened together and a flexible film made of a polymer material on which solar cells are mounted.

### Citation List

### Patent Literature

Patent Literature 1: WO 2023/175858 A1

### Summary of Invention

### Technical Problem

In the deployable solar array wing described in Patent Literature 1, the solar cells, which are made of a brittle material, are mounted on the flexible film. Therefore, protecting the solar cells from a vibrational environment during launch and so on is an important technology.

An object of the present disclosure is to make it possible to protect mounted objects from vibration in a deployable structure for space that uses a film on which mounted objects such as solar cells are mounted.

### Solution to Problem

A deployable structure for space according to the present disclosure includes
a plurality of frame units in each of which a film having a mounting surface on which a mounted object is mounted is attached to a frame, the plurality of frame units being stacked when the deployable structure for space is in a stowed state; and
a protective material that is sandwiched in a compressed manner between films in frame units that are adjacent to each other in the stowed state.

### Advantageous Effects of Invention

In the present disclosure, protective materials are sandwiched in a compressed manner between films in frame units that are adjacent to each other. This makes it possible to prevent mounted objects mounted on the films from damage or the like due to vibration.

### Brief Description of Drawings

Fig. 1 is a diagram of Embodiment 1, and is an oblique view of a deployable solar array wing 1 in a deployed state.
Fig. 2 is a diagram of Embodiment 1, showing a state in which the deployable solar array wing 1 is folded.
Fig. 3 is a diagram of Embodiment 1, and is a schematic diagram showing a structure of a frame 20.
Fig. 4 is a diagram of Embodiment 1, showing a film 30 attached to the frame 20.
Fig. 5 is a diagram of Embodiment 1, showing the deployable solar array wing 1 in a stowed state.
Fig. 6 is a diagram of Embodiment 1, showing a cross-section D-D in Fig. 5.
Fig. 7 is a diagram of Embodiment 1, showing a cross-section C1-C1 in Fig. 4 when protective materials 60 are added.
Fig. 8 is a diagram of Embodiment 1, showing the cross-section D-D in Fig. 5 when the protective materials 60 are added.
Fig. 9 is a diagram of Embodiment 1, showing a back surface 32 of a mounting surface 31 of one frame unit 10.
Fig. 10 is a diagram of Embodiment 1, showing impact of vibration when the protective materials 60 are not added.

### Description of Embodiments

### Embodiment 1.

In Embodiment 1, a deployable solar array wing 1 on which solar cells are mounted as mounted objects will be described as an example of a deployable structure for space.

### *** Description of Basic Configuration ***

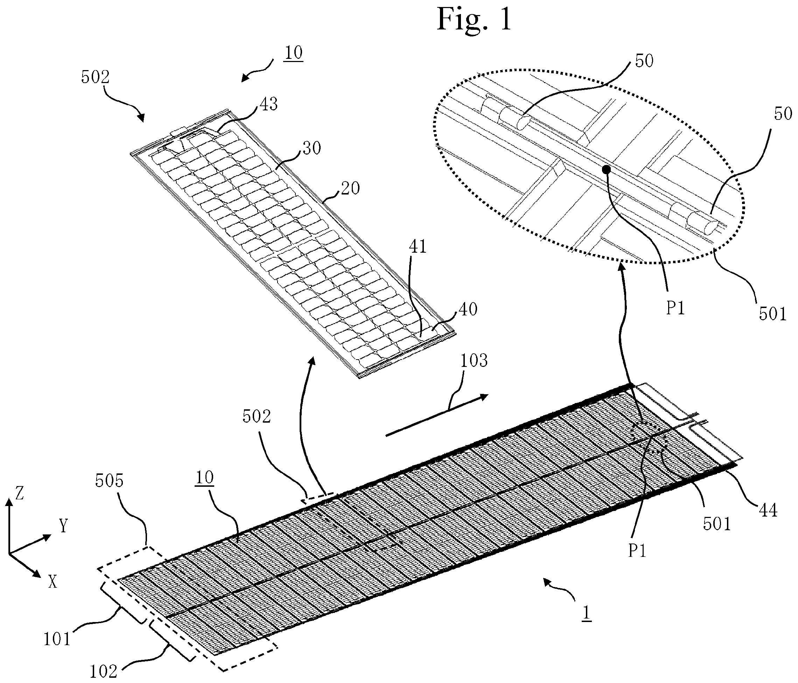

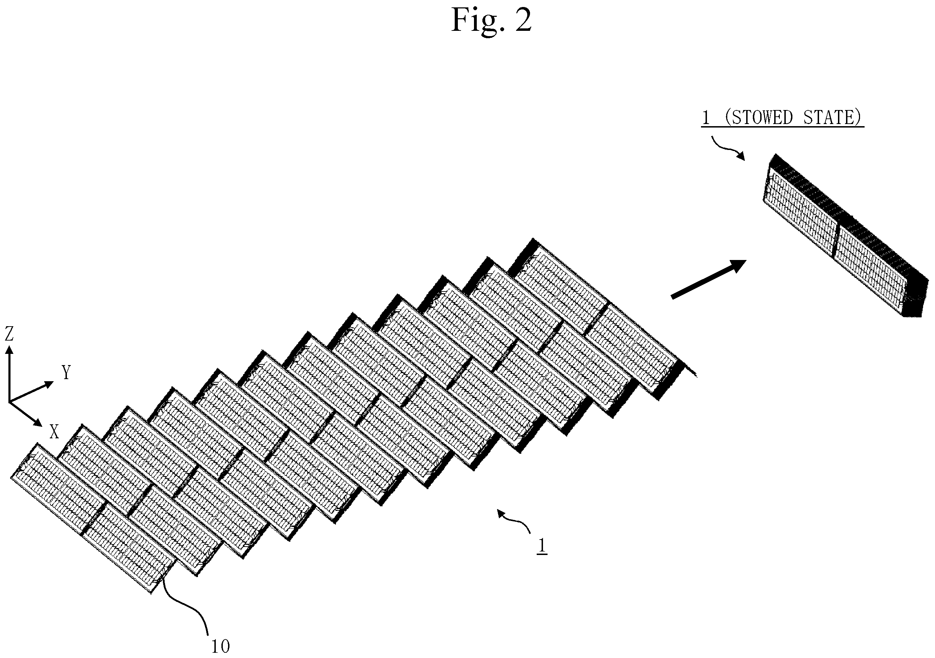

Referring to Figs. 1 and 2, a basic configuration of the deployable solar array wing 1 will be described.

Fig. 1 shows an oblique view of the deployable solar array wing 1 in a deployed state. Fig. 2 shows a state in which the deployable solar array wing 1 is folded and stowed. The deployable solar array wing 1 in Fig. 1 converts solar energy into electric power, and supplies the converted electric power to a satellite or a space system.

The deployable solar array wing 1 includes a plurality of frame units 10. As shown in Fig. 1, each frame unit 10 of the plurality of frame units 10 is aligned in a straight line in the deployed state. In Fig. 1, XYZ coordinates are indicated. In drawings where coordinates are indicated, the coordinates correspond. The deployable solar array wing 1 in Fig. 1 is composed of the plurality of frame units 101 arranged in two rows: a first row 101 and a second row 102, both extending in a linear direction 103. In the XYZ coordinates, when the deployable solar array wing 1 is deployed, a plane formed by a plurality of light-receiving surfaces to be described later is an XY plane, and a Y-axis direction is the linear direction 103. A Z-axis is one of directions normal to the XY plane.

The first row 101 is composed of a plurality of frame units 10. The second row 102 is also composed of the same number of frame units 10 as the first row 101. The deployable solar array wing 1 is composed of two rows that are the first row 101 and the second row 102. However, the deployable solar array wing 1 may be composed of a single row or may be composed of three or more rows. The number of frame units 10 forming the first row 101 and the second row 102 is not limited.

Two frame units 10 adjacent to each other in the linear direction 103 in the deployed state may be referred to as one frame unit 10 and the other frame unit 10. Fig. 1 shows an enlarged view of an area 501 and an enlarged view of an area 502 of the deployable solar array wing 1. The enlarged view of the area 501 shows a hinge connection between one frame unit 10 and the other frame unit 10. The enlarged view of the area 502 shows one frame unit 10 in which a plurality of solar cells 40 are arranged. As shown in the enlarged view of the area 501, one frame unit 10 is connected, by a hinge 50, to the other frame unit 10 that is adjacent in the deployed state in the first row 101. The same applies to the second row 102.

As shown in Fig. 2, one frame unit 10 rotates around the hinge 50 to overlap the other frame unit 10 so as to cover the other frame unit 10. The plurality of frame units 10 can be stowed in layers by one frame unit 10 covering the other frame unit 10. In the deployable solar array wing 1, the hinges 50 are positioned alternately at the peaks and valley bottoms of the plurality of frame units 10, resulting in the plurality of frame units 10 being stacked and folded. In other words, the plurality of frame units 10 are folded in an accordion-like manner, resulting in a state in which each frame unit 10 is stacked on top of one another. The direction to the peaks is a Z-axis direction, and the direction to the valleys is an opposite direction to the Z-axis direction.

The frame unit 10 will be described. As shown in Fig. 1, each frame unit 10 of the plurality of frame units 10 includes a frame 20 and a film 30.

### <Frame 20>

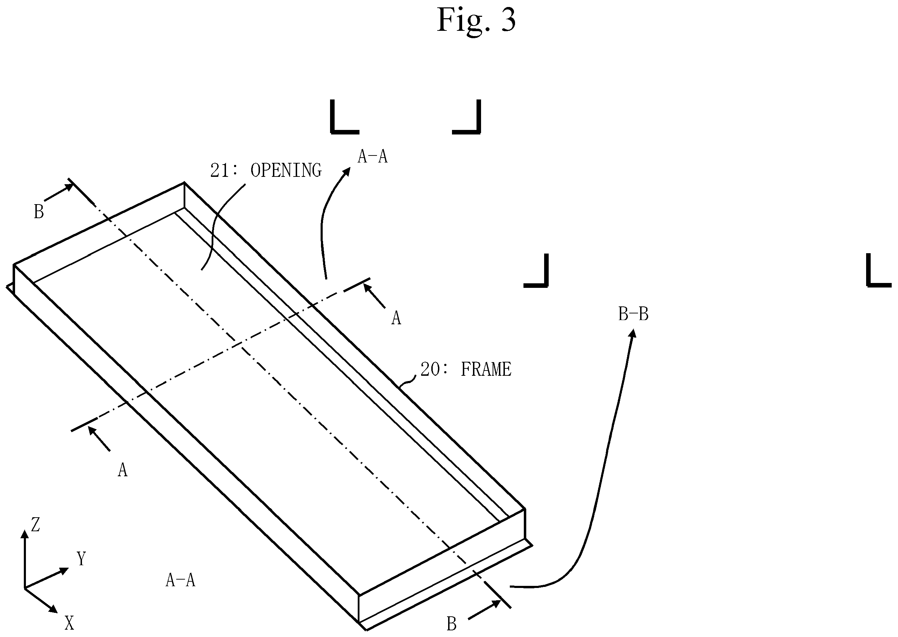

Fig. 3 is a schematic diagram showing a structure of the frame 20. The frame 20 forms a frame shape. From the perspective of mass producibility, the frame 20 is composed of beams with a simple cross-sectional shape. The beams can be made of metal or carbon fiber. The frame 20 is formed, for example, in a polygonal shape by combining a plurality of beams by mechanical fastening or adhesive. The frame 20 shown in Fig. 3 is formed in a rectangular frame shape using a plurality of beams each having an L-shaped cross-section. The L-shaped cross-section is an example, and the cross-sectional shape is not limited to this. Fig. 3 shows a cross-section A-A and a cross-section B-B. In the frame 20, the frame shape forms an opening 21.

### <Film 30>

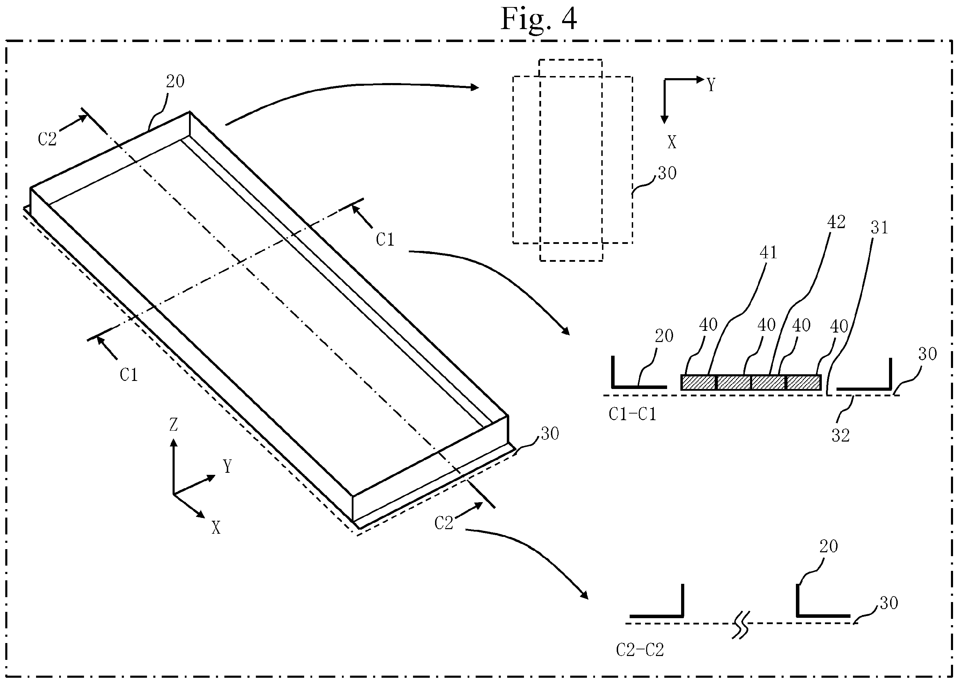

Fig. 4 shows the film 30 attached to the frame 20. In Fig. 4, the solar cells 40 are omitted. Fig. 4 shows a cross-section C1-C1, a cross-section C2-C2, and the film 30 in a deployed state. The cross-section C1-C1 and the cross-section C2-C2 correspond to the cross-section A-A and the cross-section B-B in Fig. 3. The film 30 is made of a polymer material and has flexibility. In Fig. 4, the film 30 is indicated by dashed lines. In the following drawings, the film 30 may be indicated by dashed lines. The film 30 is attached flat to a bottom surface of the frame 20 having the L-shaped cross-section. The film 30 appears as a mounting surface 31 in the opening 21 formed by the frame shape of the frame 20. As shown in Fig. 1, the plurality of solar cells 40 are mounted on the mounting surface 31 of the film 30.

### <Solar cells 40>

The plurality of solar cells 40 are mounted on the mounting surface 31 of the film 30. As shown in Fig. 1, the plurality of solar cells 40 arranged on the film 30 of one frame unit 10 constitute an electrical circuit 43. Each of a plurality of trapezoidal shapes shown in the frame unit 10 in Fig. 1 is a solar cell 40. The electrical circuit 43 outputs power generated by solar power generation from an output line 44.

### *** Description of Effects of Basic Configuration ***

### <Problems of a conventional rigid panel type>

- Rigid panels require many steps to manufacture, resulting in a long construction period and high costs.
- Since solar cells need to be mounted on a panel-by-panel basis, continuous manufacturing is not possible, making it unsuitable for mass production.
- There is a limit to how thin the panels can be made in order to ensure rigidity and strength.
- In order to save space when being installed on a satellite or space system, the size of each panel needs to be small, so that the thickness of rigid panels becomes a bottleneck for solar array wings of the rigid panel type. Due to the thickness of the rigid panels, attempting to secure a light-receiving area results in an excessively high stowage height in a stacking direction of the panels when the panels are folded and stowed like a folding screen.

### <Effects of the basic configuration>

- The configuration described above achieves properties that are superior in low cost, space saving, and mass producibility, compared to the rigid panel type widely used conventionally.
- In the configuration of the deployable solar array wing 1, the frame 20 can be assembled by combining, by mechanical fastening, metal or carbon fiber beams with a simple identical cross-sectional shape that is suitable for mass production. Therefore, it is easy to ensure the rigidity of the beams, and the thickness of the frame unit 10, which corresponds to one panel, can be reduced. In other words, the thickness of the frame 20 can be reduced.
- In the deployable solar array wing 1, the plurality of solar cells 40 are mounted on the film 30. This configuration allows for continuous manufacturing compared to the rigid panel type, where producibility is segmented on a per panel basis.

Therefore, it is possible to ensure low cost and mass producibility.

### *** Description of Light-Receiving Surface Interspace ***

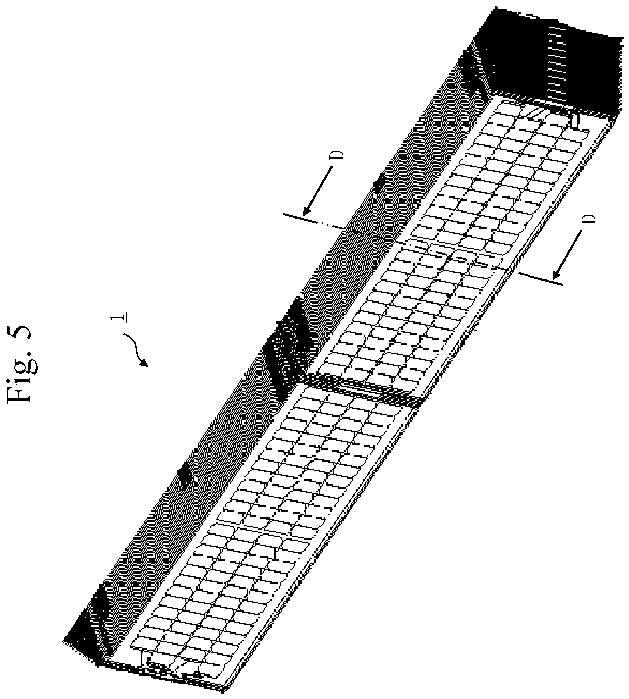

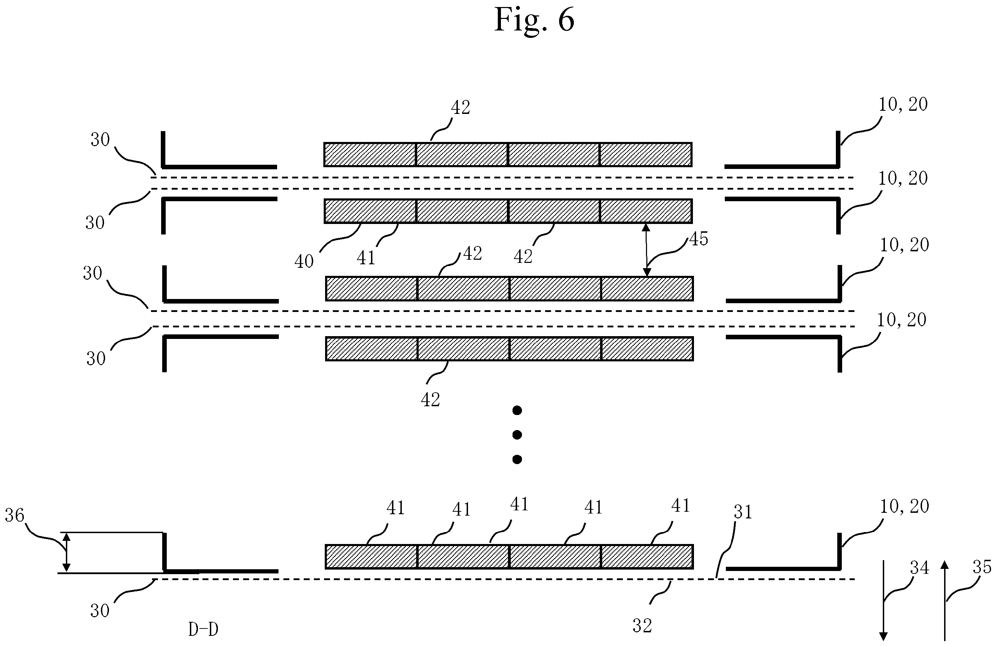

Fig. 5 shows the deployable solar array wing 1 in a stowed state. Fig. 6 shows a cross-section D-D in Fig. 5.

Referring to the frame unit 10 at the bottom in Fig. 6, the mounting surface 31 of the film 30 is located below the frame 20 in a downward direction 34, which is a direction from the mounting surface 31 to the back surface 32 of the mounting surface 31. The back surface of the light-receiving surface 41 of each solar cell 40 of the plurality of solar cells 40 is attached to the mounting surface 31. As shown in Fig. 6, taking one frame unit 10 that is second from the top and the other frame unit 10 that is third from the top as an example, entire light-receiving surfaces 42 formed by the light-receiving surfaces 41 of the respective solar cells 40 face each other in the stowed state. In the stowed state in Fig. 6, the entire light-receiving surfaces 42 face each other, which has effects that are described below.

In the frame unit 10 at the bottom in Fig. 6, the direction from the mounting surface 31 toward the back surface 32 of the mounting surface 31 is the downward direction 34. However, in the frame units 10 that are second, fourth, and so on from the top in Fig. 6, the direction from the mounting surface 31 toward the back surface 32 of the mounting surface 31 is an opposite direction 35. In the following description of the effects, the frame unit 10 at the bottom in Fig. 6 will be used as an example, so that in the case of the frame units 10 that are second, fourth, and so on from the top in Fig. 6, the downward direction 34 and the opposite direction 35 need to be interpreted in reverse.

### *** Description of Effects of Securing Light-Receiving Surface Interspace ***

The light-receiving surface 41 of the solar cell 40 is covered with a cover glass to prevent degradation due to radiation in the space environment. Therefore, the cover glass covering the light-receiving surface 41 is at high risk of mechanical damage due to contact with other components in a vibrational environment during rocket launch. When the solar cell 40 with high radiation resistance is used, the light-receiving surface 41 may not be covered with a cover glass. In this case, since the solar cell 40 is also made of a fragile material, there is a risk of mechanical damage to the solar cell 40. However, since the mounting surface 31 of the film 30 is located below the frame 20 in the downward direction 34, which is the direction from the mounting surface 31 toward the back surface 32 of the mounting surface 31, it is possible to secure a relatively large interspace between the entire light-receiving surfaces 42 that face each other. Therefore, by securing a spatial distance between the entire light-receiving surfaces 42, it is possible to prevent contact between the entire light-receiving surfaces 42 and damage to the entire light-receiving surfaces 42 to some extent even without any parts or materials that directly protect the light-receiving surfaces. Therefore, there are advantages in terms of cost and mass producibility.

In Fig. 6, when the deployable solar array wing 1 is stowed, a light-receiving surface interspace 45 between the entire light-receiving surfaces 42 is set to be at least twice the thickness of the frame 20. The thickness of the frame 20 here refers to a maximum width 36 in the downward direction 34 and the opposite direction 35 of the downward direction 34 in the case of the frame unit 10 at the bottom in Fig. 6. As shown in Fig. 6, the back surfaces 32 of the light-receiving surfaces 41 of the solar cells 40 can be placed back-to-back via the respective films 30, and the interspace between the entire light-receiving surfaces 42 can be secured to be at least twice the thickness of the frame 20. This allows the interspace between the entire light-receiving surfaces 42 of the frame units 10 that are adjacent to each other to be maintained when the deployable solar array wing 1 is stowed. Therefore, this point also provides the same effect as that of the above-described configuration "the mounting surface 31 of the film 30 is located below the frame 20 in the downward direction 34".

### *** Description of Protective Materials 60 ***

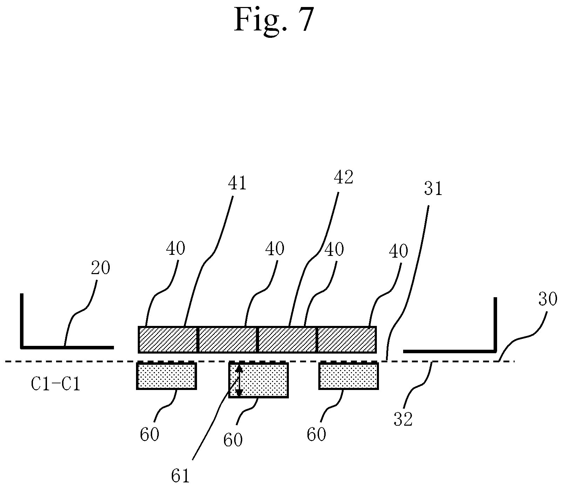

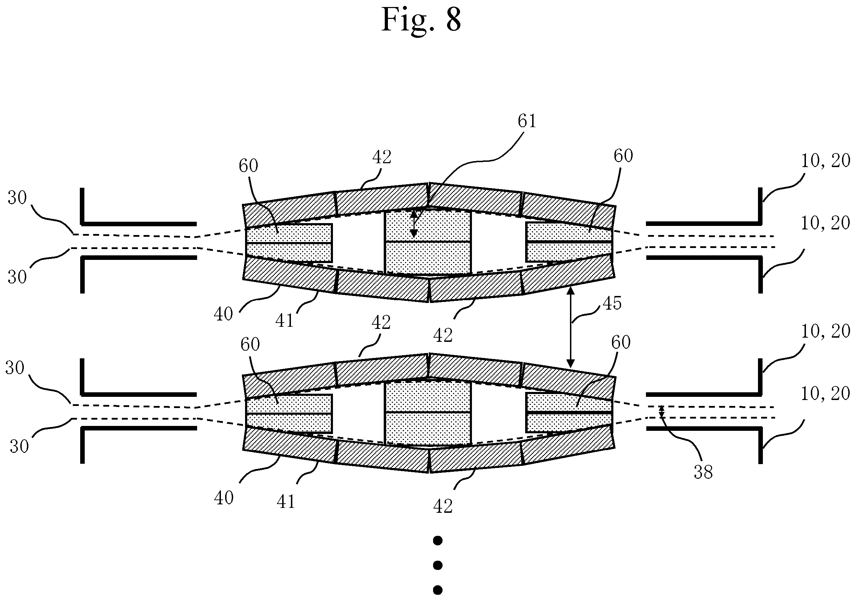

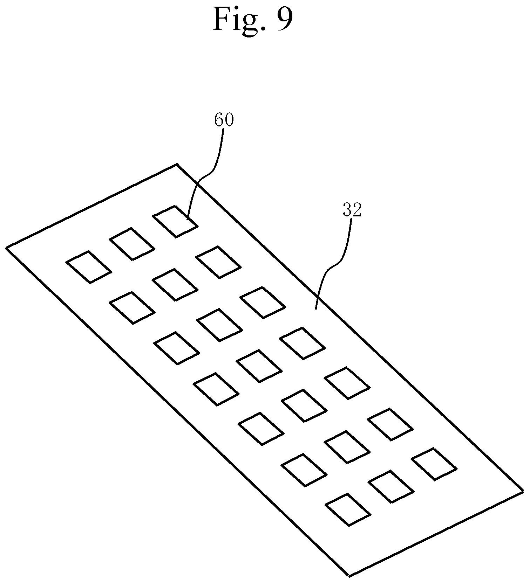

Protective materials 60 are added to the basic configuration of the deployable solar array wing 1. Fig. 7 shows the cross-section C1-C1 in Fig. 4 when the protective materials 60 are added. Fig. 8 shows the cross-section D-D in Fig. 5 when the protective materials 60 are added. Fig. 9 shows the back surface 32 of the mounting surface 31 of one frame unit 10.

As shown in Figs. 7 and 8, the protective materials 60 are arranged on the back surface 32 of the mounting surface 31 of the film 30 in each frame unit 10. As shown in Fig. 9, in Embodiment 1, the protective materials 60 are uniformly arranged in each frame unit 10. The protective materials 60 do not need to be arranged uniformly. For example, the protective materials 60 may be arranged at varying intervals depending on the position within the back surface 32. In this way, localization and non-uniformity are permissible for the arrangement of the protective materials 60. Moreover, the shape of the protective materials 60 may be changed depending on the position within the back surface 32. In Embodiment 1, the protective materials 60 are arranged at the same positions in each frame unit 10. However, the protective materials 60 do not necessarily need to be arranged at the same positions in each frame unit 10. For example, the protective materials 60 in each frame unit 10 may be arranged in a mirror-symmetrical or line-symmetrical manner. A thickness 61 of each protective material 60 is thicker as the position is closer to the center of the frame 20 and thinner as the position is closer to the ends close to the beams of the frame 20. However, even at the ends, the thickness of each protective material 60 is thicker than half a distance 38 between two films 30 whose back surfaces 32 face each other (see Fig. 8).

The protective materials 60 are composed of a material that satisfies the conditions of being lightweight, having flexibility, having resistance to the space environment, and having resilience. As a specific example, the protective materials 60 are composed of a porous material made of a polymer material. The protective materials 60 are composed of, for example, polyimide foam.

As described above, each frame unit 10 aligned in a straight line in the deployed state is folded in an accordion-like manner in the stowed state, so that in the films 30 in the frame units 10 that are adjacent to each other, the mounting surfaces 31 face each other or the back surfaces 32 of the mounting surfaces 31 face each other. Therefore, as shown in Fig. 8, when folded in an accordion-like manner in the stowed state, each protective material 60 is sandwiched between the back surfaces 32 of the films 30 in the frame units 10 that are adjacent to each other. In this case, in Embodiment 1, since the protective materials 60 are arranged at the same positions in each frame unit 10, the protective materials 60 provided on two films 30 whose back surfaces 32 face each other overlap. Since the thickness of the protective materials 60 is thicker than half the distance 38 between the two films 30, the protective materials 60 are sandwiched in a compressed manner between the back surfaces 32 of the two films 30.

The protective materials 60 are sandwiched in a compressed manner between the back surfaces 32 of the two films 30, so that each film 30 is pressurized from the back surface 32 by the restoring force of the protective material 60 and the tension of the other film 30 placed back to back, resulting in the mounting surface 31 having a convex shape and tension.

### *** Effects of Protective Materials 60 ***

### <Problems when the protective materials 60 are not present>

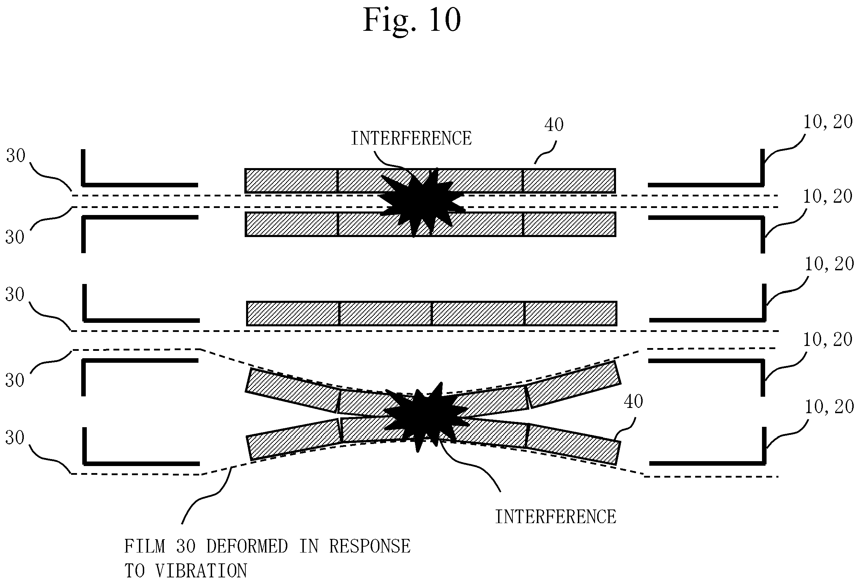

- When vibration is applied to the deployable solar array wing 1 in the stowed state, localized buckling deformation may occur in the film 30. The entire surface of the film 30 is not covered by the solar cells 40, and there are some gaps where there are no solar cells 40. Buckling deformation may occur in these gaps. If localized buckling deformation occurs in the film 30, the solar cells 40 in the vicinity of the buckling deformation that has occurred may be damaged.
- As shown in Fig. 10, when vibration is applied to the deployable solar array wing 1 in the stowed state, the film 30 in each frame unit 10 may vibrate, causing the films 30 that are adjacent to each other to interfere with each other. Especially, two films 30 whose back surfaces 32 face each other are prone to interference because the distance 38 between them is close. On the other hand, as stated in the description of the effects of securing an interspace between light-receiving surfaces, two films 30 whose mounting surfaces 31 face each other are less prone to interference because the maximum width 36 is secured. However, vibration may cause interference, and if interference occurs, the solar cells 40 may be damaged.

### <Effects of providing the protective materials 60>

- When the deployable solar array wing 1 is stowed, the protective materials 60 are sandwiched in a compressed manner between the back surfaces 32 of the two films 30. This causes the films 30 to maintain the convex shape. As a result, even when vibration is applied, localized buckling deformation in the films 30 is prevented from occurring.
- When the deployable solar array wing 1 is stowed, the protective materials 60 are sandwiched in a compressed manner between the back surfaces 32 of the two films 30. This causes the two films 30 and the protective materials 60 sandwiched between them to become integrated. In other words, the tension of the films 30 and the restoring force of the protective materials 60 cause the protective materials 60 and the two films 30 forming a tension structure to become a back-to-back integrated structure. Therefore, when vibration is applied, pressure is generated as an internal force in this structure, and a damping effect of the protective materials 60 provides a dumping effect against out-of-plane vibration due to dynamic response, which can suppress vibration response of the films 30. As a result, interference between the films 30 that are adjacent to each other can be prevented. In other words, although the clearance between the films 30 that are adjacent to each other becomes narrow in a static state, the dumping effect reduces out-of-plane displacement due to dynamic response compared to out-of-plane displacement due to dynamic response without this structure, even taking into consideration static (initial shape) displacement. In addition, since the protective materials 60 are sandwiched between the two films 30 whose back surfaces 32 face each other, interference can be prevented.

### *** Other Configurations ***

### <Variation 1>

In Embodiment 1, the deployable solar array wing 1 on which solar cells are mounted as mounted objects has been described as an example of a deployable structure for space. However, the deployable structure for space is not limited to the deployable solar array wing 1, and may be a deployable structure in which semiconductor devices or the like are mounted on the films 30 as mounted objects. As a specific example, the deployable structure for space may be a deployable antenna paddle on which antenna elements are mounted.

The embodiment and variation of the present disclosure have been described above. These embodiment and variation may be implemented in combination. Additionally, one or more of them may be partially implemented. The present disclosure is not limited to the above embodiment and variation, and various modifications can be made as necessary.

### Reference Signs List

1: deployable solar array wing; 10: frame unit; 20: frame; 21: opening; 22: shaft; 23: shaft unit; 24: projection; 25: mechanical contact; 26: pin; 27: screw; 28: nut; 29: shaft direction; 30: film; 31: mounting surface; 32: back surface; 33: through hole; 34: downward direction; 35: opposite direction; 36: maximum width; 38: distance; 40: solar cell; 41: light-receiving surface; 42: entire light-receiving surface; 43: electrical circuit; 44: output line; 45: light-receiving surface interspace; 50: hinge; 60: protective material; 61: thickness.

## Claims

1. A deployable structure for space comprising:
a plurality of frame units in each of which a film having a mounting surface on which a mounted object is mounted is attached to a frame, the plurality of frame units being stacked when the deployable structure for space is in a stowed state; and
a protective material that is sandwiched in a compressed manner between films in frame units that are adjacent to each other in the stowed state.

2. The deployable structure for space according to claim 1,
wherein in the stowed state, in the films in the frame units that are adjacent to each other, mounting surfaces face each other or back surfaces of the mounting surfaces face each other, and
wherein the protective material is placed on a back surface of the film in each of the plurality of frame units, and is sandwiched between the back surfaces of the films in the stowed state.

3. The deployable structure for space according to claim 2,
wherein in the stowed state, protective materials provided in two films whose back surfaces face each other are placed so as to overlap.

4. The deployable structure for space according to claim 2 or 3,
wherein a thickness of the protective material in a stacking direction in which each of the plurality of frame units is stacked is thicker as a position of the protective material is closer to a center of the frame.

5. The deployable structure for space according to any one of claims 2 to 4,
wherein each of the plurality of frame units aligned in a straight line in a deployed state is folded in an accordion-like manner in the stowed state, resulting in a state in which in the films in the frame units that are adjacent to each other, the mounting surfaces face each other or the back surfaces of the mounting surfaces face each other.

6. The deployable structure for space according to any one of claims 1 to 5,
wherein in the stowed state, each of the plurality of frame units is arranged so as to provide a gap of a reference distance or more between the films whose mounting surfaces face each other.
